# FASCICULE DE BREVET EUROPEEN

(11) **EP 3 562 689 B1**
(45) Date de publication et mention de la délivrance du brevet: **02.09.2020**
(21) Numéro de dépôt: 17829252.0
(22) Date de dépôt: 19.12.2017
(51) Int. Cl.: B60C 11/03, B60C 11/12

(54) **BANDE DE ROULEMENT POUR PNEU DE VÉHICULE POIDS LOURD**
LAUFFLÄCHE FÜR EINEN SCHWERLASTFAHRZEUGREIFEN
TREAD FOR A HEAVY GOODS VEHICLE TYRE

(30) Priorité: 28.12.2016 FR 1663454
(43) Date de publication de la demande: 06.11.2019
(73) Titulaire: Compagnie Générale des Etablissements Michelin, 63000 Clermont-Ferrand (FR)
(72) Inventeur: ZIVKOVIC, Tony, 63040 Clermont Ferrand Cedex 9 (FR); LARREGAIN, Arnaud, 63040 Clermont Ferrand Cedex 9 (FR)
(74) Mandataire: Millanvois, Patrick Jacques Jean
(86) Numéro de dépôt international: PCT/FR2017/053701
(87) Numéro de publication internationale: WO 2018/122496

(56) Documents cités:
- WO-A1-2015/114129
- FR-A1- 2 940 185
- FR-A1- 2 971 732
- US-A1- 2005 224 151

## Description

### DOMAINE DE L'INVENTION

L'invention concerne une bande de roulement pour pneu de véhicule poids lourd.

### ÉTAT DE LA TECHNIQUE

De façon connue, des conditions de roulage par temps de pluie requièrent une élimination la plus rapide possible de l'eau entre la bande de roulement de chaque pneu et la chaussée afin d'assurer le contact de la bande de roulement avec la chaussée. L'eau qui n'est pas repoussée sur l'avant du pneu s'écoule en partie dans les rainures et les incisions formées dans la bande de roulement du pneu que ces rainures et incisions soient orientées dans la direction circonférentielle ou la direction transversale ou encore dans une direction oblique.

### Définitions

Par découpure, on entend toute cavité ou creux réalisé notamment par moulage dans une bande de roulement, cette découpure s'étendant à la fois selon une direction principale qui est la direction d'écoulement de l'eau dans la découpure par temps de pluie et dans la profondeur de la bande de roulement.

Par rainure, on entend ici une découpure s'ouvrant sur une surface de roulement destinée à être en contact avec la chaussée, cette découpure ayant une largeur moyenne appropriée pour que les parois de matière qui le délimitent ne soient jamais en contact l'une avec l'autre dans les conditions normales d'usage du pneu.

Par incision, on entend ici une découpure mince ayant une largeur moyenne faible et telle que, sous les conditions normales d'usage du pneu, les parois de matière la délimitant puissent venir, au moins partiellement, en contact l'une sur l'autre lors du passage dans la région de contact avec la chaussée.

Par rainure cachée, on entend une cavité ou canal formé au moins en partie sous la surface de roulement à neuf, cette cavité cachée étant destinée à former une nouvelle rainure ouverte sur la surface de roulement après une usure partielle prédéterminée. Une rainure cachée est délimitée par deux parois latérales en vis-à-vis, ces deux parois latérales étant reliées entre elles par une partie inférieure formant un fond reliant les deux parois radialement vers l'intérieur et par une partie supérieure dans le prolongement de ces parois radialement vers l'extérieur. Dans cette partie supérieure peut s'ouvrir une incision reliant la rainure cachée à la surface de roulement à neuf.

Par épaisseur de matière à user, on entend l'épaisseur de bande de roulement pouvant être usée en roulage avant d'atteindre la limite légale d'usage pouvant être indiquée par des indicateurs d'usure formés notamment dans les rainures.

Dans la présente description, on utilise les termes radial ou radialement pour indiquer une direction qui, lorsqu'elle est prise sur le pneu, est une direction perpendiculaire à l'axe de rotation du pneu tandis que, lorsqu'elle est prise sur une bande de roulement seule, elle correspond à la direction de l'épaisseur de ladite bande. Par ailleurs on utilise le terme circonférentiel pour indiquer une direction qui, correspond à une direction tangente à tout cercle centré sur l'axe de rotation du pneu. Cette même direction correspond à la direction longitudinale de la bande de roulement celle-ci étant formée à la manière d'une bande plane avant incorporation à la fabrication d'un pneu.

Quelle que soit la catégorie de pneu (c'est-à-dire que ce soit un pneu équipant un véhicule de tourisme ou un véhicule de type poids lourd destiné à porter de lourdes charges), la bande de roulement doit présenter une performance en drainage de l'eau présente sur la route qui est toujours au-dessus d'une performance minimale dite performance de sécurité. En conséquence et compte tenu de l'usure progressive de la bande de roulement qui réduit progressivement les surfaces de sections transversales des rainures et par conséquent la capacité de ces rainures à évacuer un volume de liquide, il est usuel de réaliser des rainures débouchant sur la surface de roulement à l'état neuf et se prolongeant dans l'épaisseur de la bande jusqu'à au moins un niveau qui correspond à une limite légale nécessitant le retrait de la bande.

La réalisation d'une pluralité de rainures s'ouvrant à neuf sur la surface de roulement d'une bande de roulement a pour inconvénient de réduire la quantité de matière de bande pour une largeur donnée de bande et en conséquence d'affecter sensiblement les rigidités de la bande de roulement et la performance en usure. Il en résulte que pour faire face aux sollicitations subies par la bande lors d'un roulage, la personne du métier doit prévoir de compenser ces diminutions de rigidité par tout moyen à sa disposition notamment en adaptant la structure interne du pneu ce qui, bien entendu, n'est pas sans incidence sur le prix de revient du pneu lui-même. Ces diminutions de rigidité peuvent en outre affecter la vitesse d'usure, la régularité de cette usure et certaines des performances attendues en roulage.

Par ailleurs, on constate une augmentation de la résistance au roulement, ce qui se traduit par une augmentation sensible de la consommation des véhicules équipés de tels pneus, résultant d'une augmentation des pertes hystérétiques liées aux cycles de déformations de la matière caoutchoutique dont est formée la bande de roulement.

Il a été proposé dans le document EP2483087-B1 de former dans une bande de roulement des rainures ayant la particularité de s'ouvrir de manière discontinue sur la surface de roulement de la bande à l'état neuf. Cette rainure peut être considérée comme étant une rainure ondulante dans l'épaisseur de la bande en s'ouvrant régulièrement sur la surface de roulement. Ce type de rainure ondulante dans la direction de l'épaisseur d'une bande de roulement peut être formé que ce soit dans la direction circonférentielle ou dans toute autre direction. Comme décrit dans cette publication, ce type de rainure est à l'état initial (correspondant à l'état neuf de la bande) continu ce qui permet d'assurer, en roulage sur chaussée revêtue d'eau, une capture de l'eau dans les parties de rainure s'ouvrant sur la surface de roulement lors du passage dans le contact avec la chaussée, l'eau ainsi captée étant drainée dans la rainure ondulante sous la surface de roulement. Le liquide ainsi capté est ensuite éjecté en dehors de la région de contact sous l'effet des forces centrifuges. Ce même document décrit la possibilité, à l'image des dessins de sculpture antérieurs, de réaliser des connexions entre au moins deux rainures ondulantes de ce type.

Il existe d'autres documents, tel notamment EP 2323858 B1, qui préconisent la formation de creux cachés formés entièrement sous la surface de roulement de la bande de roulement à neuf. Ce type de pneu permet de renouveler du volume de drainage lorsque la bande a atteint un niveau d'usure prédéterminé.

Dans toutes ces solutions, il a été constaté qu'avant la formation de nouvelles rainures, il peut apparaître une usure localisée, cette usure pouvant être qualifiée d'irrégulière dès lors qu'elle ne se produit pas de manière uniforme sur l'ensemble de la bande de roulement. Ceci peut s'expliquer par le fait que la partie de matière radialement entre chaque cavité cachée et la surface de roulement est moins rigide que le reste.

Le document EP1015261 B1 avait proposé une solution pour faire apparaitre de façon quasi instantanée une nouvelle rainure à partir d'une cavité cachée. Ce moyen consiste en la présence de deux petites rainures de découpe, formées sur la partie supérieure de la cavité, ces petites rainures de découpe étant continues dans la direction principale de la cavité cachée. Ces petites rainures de découpe s'étendent radialement vers la surface de roulement au-delà de la paroi supérieure délimitant la cavité. Lorsque le niveau d'usure atteint ces rainures de découpe, la partie supérieure de la cavité se détache instantanément de la bande de roulement en mettant ainsi la rainure à jour. Toutefois si cette disposition permet de former rapidement une nouvelle rainure, elle ne permet pas d'éviter une usure irrégulière avant que la partie supérieure ne soit totalement détachée de la bande. De plus, cette disposition peut générer quelques difficultés de démoulage du pneu lors de sa fabrication.

Il est également fait référence aux documents de l'état de la technique suivants : FR 2971732 A1, WO 2015/114129 A1, FR 2940185 A1, US 2005/224151 A1.

### BREF EXPOSÉ DE L'INVENTION

La présente invention s'attache à proposer une solution à ce problème d'usure irrégulière pouvant intervenir avant qu'une nouvelle rainure soit formée par l'ouverture d'un canal sous-jacent à la surface de roulement.

À cet effet, l'invention a pour objet une bande de roulement pour pneu de véhicule poids lourd telle que couverte par la revendication indépendante 1.

Avantageusement, la profondeur maximale des fines rainures est choisie en fonction de la hauteur Hc de la cavité cachée, cette hauteur pouvant être fixée en fonction de l'épaisseur de matière à user de la bande de roulement. Lorsque la hauteur Hc de la cavité cachée augmente, la profondeur maximale des fines rainures augmente. Préférentiellement, la profondeur maximale des fines rainures est au moins égale à 1 mm et au plus égale à 5 mm.

Dans une variante de l'invention, les fines rainures formées sur la partie sommitale délimitant l'au moins une cavité cachée sont orientées avec un angle proche ou égal à 90 degrés avec la direction principale de l'au moins une cavité cachée.

Dans une autre variante l'au moins une cavité cachée est prolongée radialement jusqu'à la surface de roulement à neuf par une incision et les fines rainures se prolongent sur une partie des parois délimitant l'incision. Préférentiellement, la hauteur sur laquelle ces fines rainures s'étendent le long de l'incision est au plus égale à 3 mm. Dans une variante de l'invention, les fines rainures s'étendent jusqu'à une paroi latérale de l'au moins une cavité cachée et se prolongent sur cette paroi latérale sur une hauteur au plus égale à 3 mm. Cette dernière variante peut avantageusement se combiner avec la disposition selon laquelle les fines rainures se prolongent sur une partie des parois délimitant l'incision.

Grâce à cette invention, il est possible de modifier localement la rigidité de la bande de roulement au voisinage de chaque cavité cachée dans une phase d'usure assez proche de la formation d'une nouvelle rainure. Cette modification locale de rigidité assure un meilleur comportement en usure et il est ainsi possible d'obtenir un profil d'usure de la bande de roulement plus régulier avant l'apparition d'une nouvelle rainure comparativement à une même bande de roulement dépourvue de fines rainures telles que définies.

D'autres caractéristiques et avantages de l'invention ressortent de la description faite ci-après en référence aux dessins annexés qui montrent, à titre d'exemple non limitatif, une forme de réalisation de l'objet de l'invention.

### BRÈVE DESCRIPTION DES FIGURES

La figure 1 montre une vue partielle du bord d'une bande de roulement comprenant une pluralité de canaux formés entièrement sous la surface de roulement à neuf, ces canaux étant orientés transversalement c'est à dire de façon parallèle à l'axe de rotation du pneu pourvu de cette bande de roulement ;
La figure 2 montre un élément moulant destiné à mouler un canal tel que représenté à la figure 1 ;
La figure 3 montre en coupe selon un plan III-III l'élément de la figure 2 ;
La figure 4 montre une variante de canal selon l'invention prolongé vers la surface de roulement par une incision et comprenant une pluralité de petites incisions formée sur la partie supérieure du canal ;
La figure 5 montre une variante de l'invention appliquée à une rainure ondulante comportant une succession de parties ouvertes sur la surface de roulement à neuf et de parties cachées.

### DESCRIPTION DES FIGURES

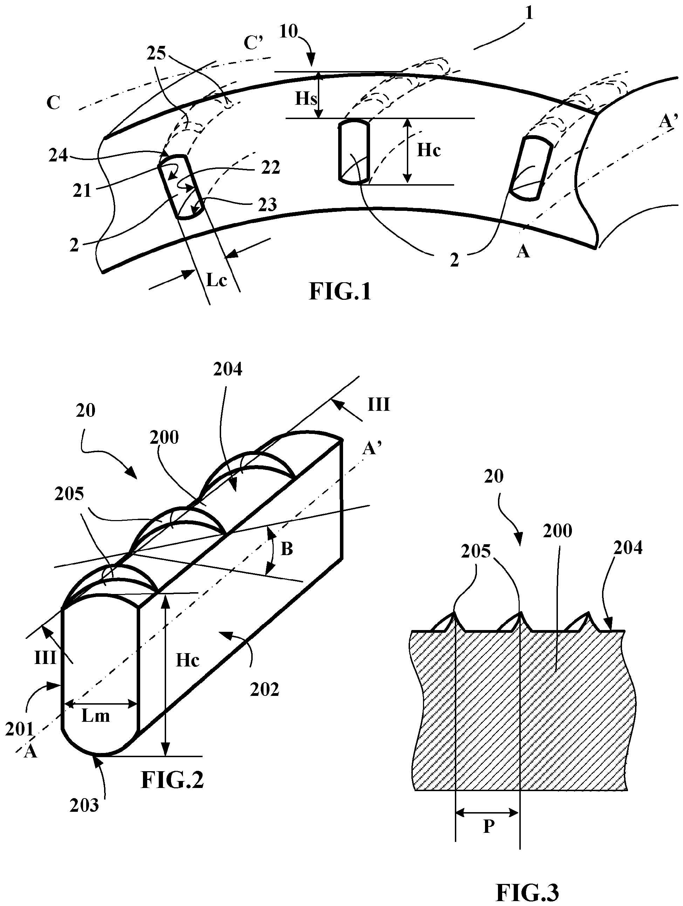

La première variante illustrant l'invention est montrée avec la figure 1 et concerne une bande de roulement 1 d'un pneu pour poids lourd, cette bande de roulement 1 ayant à neuf une surface de roulement 10 destinée à venir en contact avec une chaussée. Cette bande de roulement 1comprend des canaux 2 cachés sous la surface de roulement 10 et destinés à former après une usure partielle de la bande de nouvelles rainures ouvertes sur la surface de roulement. Ces canaux 2 sont dans le cas présent orientés transversalement c'est à dire selon une direction AA' correspondant à la direction transversale ou axiale d'un pneu pourvu de cette bande de roulement. La direction transversale se confond avec l'axe de rotation du pneu. Comme cela est visible sur la figure 1, ces canaux 2 s'ouvrent vers l'extérieur sur les bords latéraux de la bande de roulement 1. Chaque canal 2 comprend deux parois latérales 21, 22 se faisant face, la distance entre ces parois latérales définissant la largeur Lc du canal. Ces parois latérales 21 et 22 sont reliées entre elles par un fond de canal 23 dans la partie la plus à l'intérieur et par une partie sommitale 24 dans la partie la plus proche de la surface de roulement 10.

Sur chacun des canaux 2 et sur la partie sommitale 24 on trouve une pluralité de fines rainures 25 de profondeur maximale égale à 4 mm, ces fines rainures 25 étant orientées obliquement par rapport à la direction principale des canaux 2. Dans le cas présent la direction principale des canaux correspond à la direction transversale ou axiale sur la bande de roulement (indiquée par la ligne AA' sur la figure 1).

Chaque canal 2 est situé sous la surface de roulement 10 de la bande de roulement 1 à une distance Hs et a une hauteur totale Hc. Dans le cas présent, ces deux hauteurs Hs et Hc sont sensiblement égales. L'épaisseur de matière à user de la bande de roulement correspondant sensiblement à la somme des hauteurs Hs et Hc.

Chacun de ces canaux 2 peut être moulé grâce à un élément moulant tel que représenté en partie avec la figure 2.

Sur l'élément moulant 20 représenté avec la figure 2, on distingue un corps principal 200, ce corps principal 200 ayant deux faces latérales 201, 202 reliées par une partie 203 moulant le fond du canal et une partie sommitale 204 moulant la partie supérieure du canal, cette partie sommitale 204 étant prévue pour être située pendant le moulage de la bande de roulement entre le canal et la surface de roulement de la bande. La distance maximale entre la partie sommitale et le fond est égale à la hauteur Hc du canal moulé avec cet élément moulant 20.

Sur la partie sommitale 204 de l'élément moulant on distingue une pluralité de protubérances 205 réparties sur toute la largeur de cette partie sommitale 204 et selon une orientation moyenne faisant un angle B égal à 45 degrés avec la direction principale de l'élément moulant dans cet exemple ; la direction principale de l'élément moulant correspond à la direction de la longueur de l'élément indiquée par une direction AA' sur le dessin. Dans le cas présent, cette direction se confond avec la direction transversale de la bande de roulement. Bien entendu, des canaux 2 peuvent être moulés selon des directions obliques par rapport à la direction transversale.

Ces protubérances 205 ont une hauteur maximale égale à 2 mm et sont destinées à mouler de fines rainures de largeur maximale égale à 1.5 mm et de profondeur maximale égale à 2 mm, ces fines rainures s'ouvrant dans la cavité moulée par le corps 200 après le moulage de la bande. Ces protubérances 205 sont espacées entre elles d'une distance moyenne P comprise entre une fois et cinq fois la largeur maximale Lm de l'élément moulant 20. Dans le cas présent, la distance moyenne P est égale à la largeur maximale Lm séparant les faces parallèles 201, 202 de l'élément moulant.

Les fines rainures moulées par cet élément moulant ne sont pas des rainures de découpe orientées selon la direction principale du canal pour faire apparaitre une nouvelle rainure, comme cela est décrit dans le document EP1015261 B1, mais bien des rainures modifiant les rigidités locales sur toute la largeur de la partie sommitale du canal. Grâce à cette modification il est possible d'améliorer de rendre plus régulière l'usure.

La figure 3 montre une coupe de l'élément moulant 20 de la figure 2 selon un plan de coupe dont la trace est repérée sur la figure 2 par la ligne III-III. On voit sur cette coupe la partie sommitale 204 comportant des protubérances 205 pour le moulage de fines rainures dans la bande de roulement, ces protubérances étant espacées d'une distance P.

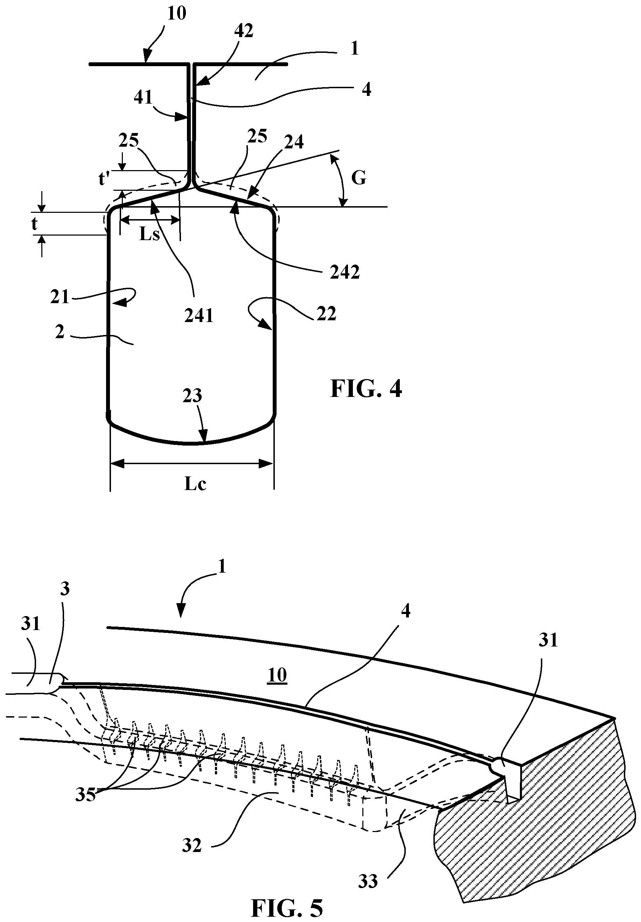

La figure 4 montre une variante de l'invention selon laquelle un canal 2 est prolongé vers la surface de roulement 10 par une incision 4. Dans cette variante, la partie sommitale 24 du canal 2 est subdivisée de part et d'autre de l'incision 4 en deux parties sommitales 241, 242. Chacune de ces parties sommitales est inclinée selon un angle G égal dans l'exemple à 15 degrés de manière à former entre elle un angle de 150 degrés. Sur chacune de ces parties sommitales 241, 242, il est en outre formé une pluralité de fines rainures 25 orientées transversalement. Ces fines rainures 25 font un angle de 90 degrés avec la direction principale de la cavité cachée correspondant à la direction perpendiculaire au plan de la figure 4. Ces fines rainures 25 s'étendent un peu sur les parois 41, 42 délimitant l'incision 4 ainsi que sur les faces latérales 21, 22 délimitant la cavité 2.

La combinaison de la présence d'une pluralité de fines rainures 25 et de l'inclinaison des parties sommitales 241, 242 est particulièrement efficace sur le faciès de l'usure.

La troisième variante montrée avec la figure 5 concerne une bande de roulement 1 pour pneu de véhicule poids lourd de dimension 315/70R22.5.

Cette bande de roulement comporte dans son épaisseur au moins une rainure dite ondulante, cette rainure ondulante 3 comportant une alternance de parties de rainures ouvertes 31 sur la surface de roulement à neuf 10 et de cavités cachées 32 destinées à s'ouvrir sur la surface de roulement après une usure prédéterminée pour former de nouvelles rainures. Ces parties de rainure ouvertes 31 et de cavités cachées 32 sont reliées entre elles par des parties de liaison 33 assurant une continuité à neuf de l'écoulement de fluides dans la rainure ondulante, cet écoulement se faisant selon la direction principale de la rainure. Ce type de rainure ondulante est décrit dans le brevet EP2483087-B1 auquel il est fait référence notamment pour les figures.

La largeur maximale de la cavité cachée 32 est égale à 5 mm et sa hauteur est égale à 6 mm.

Afin de faciliter le moulage et le démoulage de cette rainure ondulante 3, il est en outre formé une incision 4 s'étendant entre chaque cavité cachée 32 et chaque partie de liaison 33 avec la surface de roulement à neuf 10. L'incision 4 a une largeur égale à 0.6 mm et est délimitée par des parois aptes à venir au moins partiellement en contact l'une contre l'autre dans les conditions d'usage.

Chaque partie cachée 32 comprend deux parois latérales en vis-à-vis ces parois latérales étant reliées entre elles par une partie inférieure formant le fond radialement à l'intérieur et par une partie supérieure radialement à l'extérieur. La partie supérieure est divisée en deux parties se prolongeant par des parois délimitant l'incision 4.

Dans le but d'améliorer le faciès de l'usure radialement au-dessus des cavités cachées et ainsi atteindre une usure plus régulière sur l'ensemble de la surface de roulement, il est formé sur la partie supérieure de chaque cavité cachée une pluralité de fines rainures 35 orientées dans le cas présent pour faire un angle de 90 degrés avec la direction principale de la rainure 3, cette direction principale correspondant à la direction de l'écoulement de l'eau dans la rainure 3 par temps de pluie.

Ces fines rainures affectent sur une faible hauteur (1.5 mm) les parois délimitant l'incision 4. En outre ces mêmes fines rainures 35 se prolongent sur une faible hauteur (1.5 mm) sur les parois délimitant en largeur chaque cavité cachée 32. Ces fines rainures 35 sont disposées parallèlement les unes aux autres avec un pas égal à 6 mm.

Après usure partielle de la bande, et avant même que les fines rainures 35 apparaissent sur la surface de roulement de la bande de roulement, l'absence de matière liée à la présence de ces fines rainures génère un assouplissement localisé au voisinage de la cavité ce qui permet d'assurer une usure plus régulière.

L'invention n'est pas limitée aux exemples présentés et diverses modifications peuvent y être apportés par la personne du métier sans sortir de son cadre tel que défini par les revendications.

## Revendications

1. Bande de roulement (1) pour pneu de véhicule poids lourd ayant une épaisseur totale correspondant à l'épaisseur de matière à user en roulage, cette bande de roulement (1) ayant à neuf une surface de roulement (10) destinée à venir en contact avec une chaussée lors du roulage, cette bande de roulement (1) comprenant au moins une cavité cachée (2) destinée à former une nouvelle rainure s'ouvrant sur la surface de roulement (10) après une usure partielle prédéterminée, cette au moins une cavité cachée (2) comprenant deux parois latérales (21, 22) en vis-à-vis reliées entre elles par un fond (23) radialement vers l'intérieur et par une partie sommitale (24) radialement vers l'extérieur, la bande de roulement (1) étant **caractérisée en ce que** la partie sommitale (24) de l'au moins une cavité cachée (2) est pourvue d'une pluralité de fines rainures (25) dont la profondeur s'étend radialement vers l'extérieur à partir de la partie sommitale (24) délimitant l'au moins une cavité cachée (2), ces fines rainures (25) s'étendant selon une direction faisant un angle au moins égal à 40 degrés avec la direction principale de l'au moins une cavité cachée (2), la direction principale d'une cavité cachée (2) étant la direction de plus grande dimension de ladite cavité cachée (2) et correspondant à la direction d'écoulement d'un liquide à l'intérieur de cette cavité cachée (2) lorsqu'elle est ouverte sur la surface de roulement (10) et forme une nouvelle rainure.

2. Bande de roulement (1) selon la revendication 1 **caractérisée en ce que** les fines rainures (25) formées sur la partie sommitale (24) délimitant l'au moins une cavité cachée (2) ont une profondeur maximale au moins égale à 1 mm et au plus égale à 5 mm.

3. Bande de roulement (1) selon la revendication 1 ou la revendication 2 **caractérisée en ce que** les fines rainures (25) formées sur la partie sommitale (24) délimitant l'au moins une cavité cachée (2) sont orientées avec un angle proche ou égal à 90 degrés avec la direction principale de l'au moins une cavité cachée (2).

4. Bande de roulement (1) selon l'une quelconque des revendications 1 à 3 **caractérisée en ce que** l'au moins une cavité cachée (2) est prolongée radialement jusqu'à la surface de roulement (10) à neuf par une incision (4).

5. Bande de roulement (1) selon la revendication 4 **caractérisée en ce que** les fines rainures (25) se prolongent sur une partie des parois (41, 42) délimitant l'incision (4).

6. Bande de roulement (1) selon la revendication 5 **caractérisée en ce que** la hauteur sur laquelle ces fines rainures (25) s'étendent le long de l'incision (4) est au plus égale à 3 mm.

7. Bande de roulement (1) selon l'une quelconque des revendications 1 à 6 **caractérisée en ce que** les fines rainures (25) s'étendent jusqu'à une paroi latérale (21, 22) de l'au moins une cavité cachée (2) et se prolongent sur cette paroi latérale (21, 22) sur une hauteur au plus égale à 3 mm.

## Patentansprüche

1. Lauffläche (1) für einen Schwerlastfahrzeugreifen, die eine Gesamtstärke aufweist, die der beim Fahren zu nutzenden Materialstärke entspricht, wobei diese Lauffläche (1) im Neuzustand eine Laufoberfläche (10) aufweist, die dazu bestimmt ist, beim Fahren mit einer Fahrbahn in Kontakt zu kommen,
wobei diese Lauffläche (1) mindestens einen versteckten Hohlraum (2) beinhaltet, der dazu bestimmt ist, nach einer vorgegebenen teilweisen Abnutzung eine neue Rille, die sich an der Laufoberfläche (10) öffnet, zu bilden, wobei dieser mindestens eine versteckte Hohlraum (2) zwei gegenüberliegende Seitenwände (21, 22) beinhaltet, die durch einen radial nach innen gelegenen Boden (23) und durch einen radial nach außen gelegenen Scheitelbereich (24) miteinander verbunden sind, wobei die Lauffläche (1) **dadurch gekennzeichnet ist, dass** der Scheitelbereich (24) des mindestens einen versteckten Hohlraums (2) über eine Vielzahl von feinen Rillen (25) verfügt, deren Tiefe sich von dem Scheitelbereich (24), der den mindestens einen versteckten Hohlraum (2) abgrenzt, radial nach außen erstreckt, wobei sich diese feinen Rillen (25) gemäß einer Richtung, die mit der Hauptrichtung des mindestens einen versteckten Hohlraums (2) einen Winkel von mindestens gleich 40 Grad bildet, erstrecken, wobei die Hauptrichtung eines versteckten Hohlraums (2) die Richtung mit der größten Abmessung des versteckten Hohlraums (2) ist und der Strömungsrichtung einer Flüssigkeit im Inneren dieses versteckten Hohlraums (2) entspricht, wenn dieser an der Laufoberfläche (10) geöffnet ist und eine neue Rille bildet.

2. Lauffläche (1) nach Anspruch 1, **dadurch gekennzeichnet, dass** die feinen Rillen (25), die an dem Scheitelbereich (24), der den mindestens einen versteckten Hohlraum (2) abgrenzt, gebildet sind, eine maximale Tiefe von mindestens gleich 1 mm und höchstens gleich 5 mm aufweisen.

3. Lauffläche (1) nach Anspruch 1 oder Anspruch 2, **dadurch gekennzeichnet, dass** die feinen Rillen (25), die an dem Scheitelbereich (24), der den mindestens einen versteckten Hohlraum (2) abgrenzt, gebildet sind, mit einem Winkel nahe oder gleich 90 Grad zu der Hauptrichtung des mindestens einen versteckten Hohlraums (2) ausgerichtet sind.

4. Lauffläche (1) nach einem der Ansprüche 1 bis 3, **dadurch gekennzeichnet, dass** der mindestens eine versteckte Hohlraum (2) durch einen Einschnitt (4) bis zu der Laufoberfläche (10) im Neuzustand fortgesetzt ist.

5. Laufoberfläche (1) nach Anspruch 4, **dadurch gekennzeichnet, dass** sich die feinen Rillen (25) über einen Teil der Wände (41, 42), die den Einschnitt (4) abgrenzen, fortsetzen.

6. Laufoberfläche (1) nach Anspruch 5, **dadurch gekennzeichnet, dass** die Höhe, über die sich diese feinen Rillen (25) entlang des Einschnitts (4) erstrecken, höchstens gleich 3 mm ist.

7. Lauffläche (1) nach einem der Ansprüche 1 bis 6, **dadurch gekennzeichnet, dass** sich die feinen Rillen (25) bis zu einer Seitenwand (21, 22) des mindestens einen versteckten Hohlraums (2) erstrecken und sich über eine Höhe von höchstens gleich 3 mm über diese Seitenwand (21, 22) fortsetzen.

## Claims

1. Tread (1) for a heavy-duty vehicle tyre having a total thickness corresponding to the thickness of material to be worn away during running, this tread (1) having, in the new state, a tread surface (10) intended to come into contact with a roadway when running, this tread (1) comprising at least one hidden cavity (2) intended to form a new groove opening onto the tread surface (10) after a predetermined amount of partial wear, this at least one hidden cavity (2) comprising two opposite lateral walls (21, 22) connected together by a bottom (23) radially towards the inside and by a crown part (24) radially towards the outside, the tread (1) being **characterized in that** the crown part (24) of the at least one hidden cavity (2) is provided with a plurality of fine grooves (25), the depth of which extends radially towards the outside from the crown part (24) delimiting the at least one hidden cavity (2), these fine grooves (25) extending in a direction that makes an angle at least equal to 40 degrees with the main direction of the at least one cavity (2), the main direction of a hidden cavity (2) being the direction of the largest dimension of said hidden cavity (2) and corresponding to the direction of flow of a liquid inside this hidden cavity (2) when it is open onto the tread surface (10) and forms a new groove.

2. Tread (1) according to Claim 1, **characterized in that** the fine grooves (25) formed in the crown part (24) delimiting the at least one hidden cavity (2) have a maximum depth at least equal to 1 mm and at most equal to 5 mm.

3. Tread (1) according to Claim 1 or Claim 2, **characterized in that** the fine grooves (25) formed in the crown part (24) delimiting the at least one hidden cavity (2) are oriented at an angle close or equal to 90 degrees to the main direction of the at least one hidden cavity (2).

4. Tread (1) according to any one of Claims 1 to 3, **characterized in that** the at least one hidden cavity (2) is continued radially as far as the tread surface (10) in the new state by a sipe (4).

5. Tread (1) according to Claim 4, **characterized in that** the fine grooves (25) continue on a part of the walls (41, 42) delimiting the sipe (4).

6. Tread (1) according to Claim 5, **characterized in that** the height over which these fine grooves (25) extend along the sipe (4) is at most equal to 3 mm.

7. Tread (1) according to any one of Claims 1 to 6, **characterized in that** the fine grooves (25) extend as far as a lateral wall (21, 22) of the at least one hidden cavity (2) and are continued on this lateral wall (21, 22) over a height at most equal to 3 mm.
